# EUROPÄISCHE PATENTSCHRIFT

(11) **EP 1 786 539 B1**
(45) Veröffentlichungstag und Bekanntmachung des Hinweises auf die Patenterteilung: **12.12.2007**
(21) Anmeldenummer: 05783379.0
(22) Anmeldetag: 31.08.2005
(51) Int. Cl.: B01D 36/00, F02M 37/22

(54) **KRAFTSTOFFFILTER EINES VERBRENNUNGSMOTORS**
FUEL FILTER FOR A COMBUSTION ENGINE
FILTRE A CARBURANT D'UN MOTEUR A COMBUSTION

(30) Priorität: 01.09.2004 DE 102004042245
(43) Veröffentlichungstag der Anmeldung: 23.05.2007
(73) Patentinhaber: Mahle Filtersysteme GmbH, 70376 Stuttgart (DE)
(72) Erfinder: GIOLITTI, Riccardo, Carlo, I-10040 La Loggia - Torino (IT); HOFFMANN, Dierk, 70569 Stuttgart (DE); WEISER, Thomas, 75031 Eppingen-Rohrbach (DE)
(74) Vertreter: Patentanwalts-Partnerschaft Rotermund + Pfusch + Bernhard
(86) Internationale Anmeldenummer: PCT/DE2005/001519
(87) Internationale Veröffentlichungsnummer: WO 2006/024280

(56) Entgegenhaltungen:
- WO-A-03/067068
- DE-A1- 3 600 669
- GB-A- 2 129 329
- US-A- 4 637 351

## Beschreibung

Die Erfindung betrifft ein Kraftstofffiltersystem eines Verbrennungsmotors nach dem Oberbegriff des Patentanspruchs 1.

Insbesondere in Dieselkraftstofffiltern wird in dem Kraftstoff enthaltendes Wasser üblicherweise abgeschieden, in einem unten innerhalb des Filtergehäuses liegenden Raum gesammelt und nach Erreichen eines vorbestimmten Sammelvolumens abgelassen. Ein Sammeln abgeschiedenen Wassers in einem unten liegenden Filtergehäusebereich ist möglich, weil Wasser ein gegenüber dem Kraftstoff größeres spezifisches Gewicht besitzt und sich daher unterhalb des Kraftstoffes absetzt, wenn es zuvor innerhalb des Filters zu abscheidefähigen Tröpfchen koaguliert ist. Die erforderliche Tröpfchenbildung kann innerhalb des Filters durch spezielle, an sich bekannte Wasserabscheidemaßnahmen bewirkt beziehungsweise erhöht werden.

Das Volumen des sich im unteren Raum eines Flüssigkeitsfilters absetzenden Wassers wird bei bekannten Filtern detektiert, um ein Ablassen des angesammelten Wassers nach Erreichen eines vorgebbaren Maximalvolumens sicherzustellen.

Um ein Ablassen in einem Filter unten angesammelten Wassers zu vermeiden, ist es aus GB 21 29 329 B bekannt, das gesammelte Wasser in einem äußerst geringen Volumenstrom durch eine in der Luftansaugleitung des Verbrennungsmotors vorgesehene Venturidüse abzusaugen und mit der Ansaugluft dem Verbrennungsprozess zuzuführen. Ähnliche Einrichtungen sind aus DE 36 00 669 A1 und US 4,637,351 A bekannt.

Aus WO 03 067 068 A1 ist eine Kraftstofffiltereinrichtung bekannt, bei der in einem unteren Bereich des Kraftstofffilters gesammeltes Wasser in einen, von dem Filter getrennten Wassersammelraum abfließen kann. Zusammen mit dem Wasser aus dem Filter in einem gewissen Maße unvermeidlich abströmender Kraftstoff kann aus dem Wassersammelraum, in dem er sich nach oben absetzt, in den Tank zurückfließen. Der in den Tank zurückfließende Kraftstoff muss zu dem Kraftstoff, der in üblicher Weise für den Verbrennungsmotor gefördert wird, zusätzlich in einer Art Nebenkreislauf gefördert werden.

Die Erfindung beschäftigt sich mit dem Problem, bei einem gattungsgemäßen Kraftstofffilter ein großes Wassersammelvolumen zu schaffen, ohne hierdurch einerseits das Bauvolumen des Filters über ein Maß zu erhöhen, das dieses ohne einen Wassersammelraum einnehmen würde und andererseits den üblichen, für den Betrieb des Verbrennungsmotors zu fördernden Kraftstoffvolumenstrom zu erhöhen durch beispielsweise einen Kraftstoffnebenkreislauf, wie ein solcher bei der Einrichtung nach der vorstehend abgehandelten WO 03 067 068 A1 erforderlich ist.

Gelöst wird dieses Problem durch ein gattungsgemäßes Kraftstofffiltersystem mit dem kennzeichnenden Merkmal des Patentanspruchs 1.

Vorteilhafte und zweckmäßige Ausgestaltungen sind Gegenstand der Unteransprüche.

Die Erfindung beruht auf dem allgemeinen Gedanken, das abgeschiedene Wasser aus dem Filtergehäuse in einen von dem Filter getrennten Wassersammelraum zu transportieren und zwar während des Motorbetriebes auf eine möglichst einfache Weise. Für den Fall, dass das Kraftstofffilter durch unter Druck in dieses eingeleiteten Kraftstoff durchströmt wird, kann es bereits ausreichen, dass der Wassersammelraum von dem Kraftstofffilter getrennt in einer gedrosselten Verbindungsleitung zwischen dem Boden des Kraftstofffilters und einer stromab des Kraftstofffilters liegenden Einleitung in die Kraftstoffförderleitung angeordnet ist. Bei einem Kraftstofffilter, durch das der Kraftstoff gesaugt wird, ist dagegen zwingend in der vorgenannten Verbindungsleitung zwischen Kraftstofffilter und Kraftstoff-Förderleitung eine Pumpe erforderlich. Eine solche Pumpe kann fakultativ auch bei einem Kraftstofffilter eingesetzt werden, durch das der Kraftstoff entsprechend dem vorstehend zuerst genannten Fall hindurchgedrückt wird. Besonders geeignet als eine Pump- beziehungsweise Saug-Einrichtung ist eine Venturidüse. Der Wassersammelraum kann an einer beliebig weit von dem Kraftstofffilter entfernten Stelle vorgesehen werden, an der genügend Einbauraum für ein relativ großes Wassersammelraumvolumen zur Verfügung steht.

Eine erfindungsgemäße Venturidüse ist der Kraftstoffförderleitung zugeordnet, durch die der Kraftstoff den Brennräumen des Verbrennungsmotors zugeführt wird, und zumindest von einem Teilstrom dieses Kraftstoffstromes durchströmt. Das von der Venturidüse aus dem Wassersammelraum angesaugte Fluid soll ausschließlich Kraftstoff sein. Zu diesem Zweck wird der von dem Filter getrennte Wassersammelraum bei einer erstmaligen Inbetriebnahme des Verbrennungsmotors oder nach einem Filterwechsel mit Kraftstoff geflutet. Dieses Fluten erfolgt in der gleichen Weise wie das Fluten des Kraftstofffilters, wobei dieses Fluten üblicherweise als "Kraftstofffilterentlüften" bezeichnet wird.

Sind Kraftstofffilter und der von diesem getrennte, mit dem Filter leitungsmäßig verbundene Wassersammelraum mit Kraftstoff geflutet, erfolgt das Sammeln von in dem Filter abgeschiedenem Wasser wie folgt.

Innerhalb des Kraftstofffilters, das in üblicher Weise für eine Wasserabscheidung ausgestaltet ist, setzt sich beispielsweise reinseitig abgeschiedenes Wasser unten in dem Filtergehäuse ab. Bei Motorbetrieb wird durch die der Kraftstoffförderleitung zugeordnete Venturidüse vorzugsweise kontinuierlich Kraftstoff aus einem oberen Bereich des Wassersammelraumes abgesaugt. Hierdurch wird zwangsläufig ein größenmäßig gleicher Volumenstrom dem Boden des Kraftstofffilters entzogen. Mit dem Wasser aus dem Boden des Filtergehäuses entzogener Kraftstoff setzt sich aufgrund seines gegenüber Wasser geringeren spezifischen Gewichtes zwangsläufig in dem Wassersammelraum oben ab. Auf diese Weise ist gewährleistet, dass von der insbesondere als Venturidüse ausgebildeten Förderpumpe ausschließlich Kraftstoff und nicht Wasser angesaugt wird.

Grundsätzlich ist ein kontinuierlicher und diskontinuierlicher Wasserentzug aus dem Boden des Kraftstofffilters möglich. Wichtig beim Abführen abgeschiedenen Wassers aus dem Kraftstofffilter ist, dass die "Tröpfchenform" des abgeschiedenen Wassers beim Abziehen aus dem Filter nicht verloren geht, da anderenfalls in dem von dem Filter getrennten Wassersammelraum eine unbedingt zu vermeidende Rückvermischung zwischen Wasser und Kraftstoff erfolgen könnte. Eine solche Rückvermischung würde erfolgen, wenn das Wasser nicht mehr in einer ausreichend großen "Tröpfchenform" vorliegt, in der sich eine Auftrennung zwischen Wasser und Kraftstoff aufgrund der unterschiedlichen spezifischen Gewichte einstellt. Bei einem kontinuierlichen Betrieb, das heißt einem kontinuierlichen Absaugen eines Volumenstroms aus dem Filter ist eine Größe des abgesaugten Volumenstromes zu wählen, durch die sichergestellt ist, dass während des Motorbetriebes innerhalb des Filters abgeschiedenes Wasser ohne ein Aufstauen innerhalb des Filters abgeführt werden kann.

Bei einem diskontinuierlichen Betrieb muss dafür gesorgt werden, dass ein bestimmtes, vorgebbares Maß eines abgeschiedenen Wasservolumens in dem Filter nicht überschritten wird. Dies kann beispielsweise durch einen an dem Filter vorgesehenen Wasserstandssensor erreicht werden.

Sowohl für einen kontinuierlichen wie diskontinuierlichen Betrieb ist der Wassersammelraum mit einem Wasserstandssensor zu versehen um sicherzustellen, dass das Wasser aus dem Sammelraum entleert wird, bevor die Gefahr eines Eintritts in die zu der Venturidüse führenden Verbindungsleitung besteht.

Für ein Abführen des Wassers aus dem Sammelraum können konstruktive Maßnahmen vorgesehen sein, wie sie bereits allgemein bei Wassersammelräumen bekannt sind, die direkt in das Kraftstofffiltergehäuse integriert sind. Eine besonders einfache Maßnahme besteht in dem Vorsehen einer Ablassschraube im Bodenbereich des Sammelraumes.

Ein besonders vorteilhaftes, nachstehend noch näher erläutertes Ausführungsbeispiel ist in der Zeichnung dargestellt.

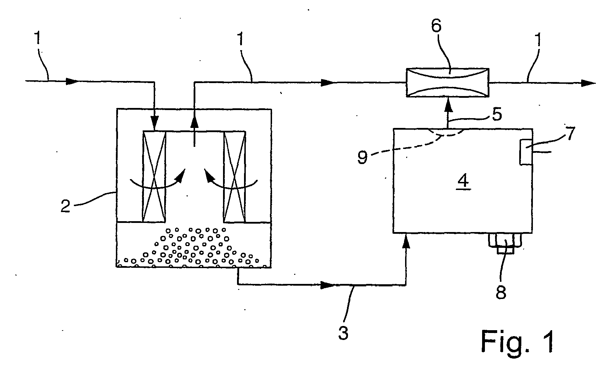

In dieser zeigt die einzige
- Fig. 1: eine schematische Darstellung eines Kraftstofffilters mit einem von diesem entfernt liegenden Wassersammelraum.

In einer Dieselkraftstoff-Förderleitung 1 befindet sich ein von dem Kraftstoff durchströmtes Kraftstofffilter 2. Der Kraftstoff wird bei diesem Ausführungsbeispiel durch das Kraftstofffilter gesaugt.

Von dem Boden dieses Kraftstofffilters 2 führt eine Flüssigkeitsleitung 3 in einen als Tank ausgebildeten Wassersammelraum 4. Diese Flüssigkeitsleitung 3 ist derart an dem Wassersammelraum 4 angeschlossen, dass sie dort etwa im unteren Bodenbereich einmündet. Von einem oberen Bereich des Wassersammelraumes 4 führt eine Verbindungsleitung 5 über eine in der Kraftstoff-Förderleitung 1 vorgesehene Venturidüse 6 in den Strömungsraum der Kraftstoff-Förderleitung 1.

Der Wassersammelraum 4 kann in einer beliebigen Entfernung von dem Kraftstofffilter 2 angebracht sein und dabei eine Lage besitzen, die oberhalb des unteren Bereiches des Kraftstofffilters 2 liegt, in dem sich in dem Kraftstofffilter 2 abgeschiedenes Wasser schwerkraftbedingt absetzt. Eine solche Lageunabhängigkeit ermöglicht die als Venturidüse 6 ausgebildete Förderpumpe, die in dem Kraftstofffilter 2 im Bodenbereich entzogene Flüssigkeit problemlos auf örtlich höhere Niveaulagen fördern kann.

Im oberen Bereich des Wassersammelraumes 4 ist ein Wasserstandssensor 7 vorgesehen. Im Bodenbereich des Wassersammelraumes befindet sich eine übliche Ablassschraube 8, durch deren Betätigung Wasser aus dem Wassersammelraum 4 abgelassen werden kann. In demjenigen Bereich, in dem die Verbindungsleitung 5 an den Wassersammelraum 4 angeschlossen ist, kann eine Schutzeinrichtung 9 vorgesehen sein, durch die sichergestellt werden kann, dass in die Verbindungsleitung 5 ausschließlich Kraftstoff und kein Wasser eintreten kann.

Die vorstehend beschriebene Einrichtung kann wie folgt betrieben werden.

Vor einer erstmaligen Inbetriebnahme eines Verbrennungsmotors werden das Kraftstofffilter 2 und der Wassersammelraum 4 mit Kraftstoff geflutet. Dies erfolgt in einer Weise, wie dies üblicherweise bei einem Entlüften eines Kraftstofffilters 2 in Dieselmotoren erfolgt. Sind das Kraftstofffilter 2 und der Wassersammelraum 4 vollständig geflutet, so befindet sich bei Motorbetrieb zunächst ausschließlich Kraftstoff in dem Wassersammelraum 4.

Bei einer kontinuierlichen Betriebsweise der erfindungsgemäßen Einrichtung wird die Venturidüse 6 auf eine Saugleistung ausgelegt, durch die sichergestellt ist, dass stets soviel Flüssigkeit durch die Flüssigkeitsleitung 3 aus dem Kraftstofffilter 2 entnommen wird, dass durch in den Kraftstofffilter 2 abgeschiedenes Wasser kein Wasserstau entstehen kann. Wasserstau in diesem Sinne bedeutet, dass stets soviel Wasser durch die Leitung 3 abgezogen werden muss wie - zumindest durchschnittlich - innerhalb des Filters aus dem Kraftstoff im Motorbetrieb abgeschieden wird. Durch die Flüssigkeitsleitung 3 wird abgeschiedenes Wasser zusammen mit Kraftstoff abgesaugt und in den Wassersammelraum 4 eingeführt. Dieser Flüssigkeitstransport muss so erfolgen, dass der "Tröpfchenzustand" des Wassers erhalten bleibt. Nur so ist sichergestellt, dass in dem Wassersammelraum 4 eine dort notwendige Trennung zwischen Kraftstoff und Wasser durch die spezifisch unterschiedlichen Gewichte dieser beiden Flüssigkeiten eintritt. Ist eine solche Trennung durch eine entsprechende Auslegung der Flüssigkeitsleitung 3 gewährleistet, kann sich der Kraftstoff im oberen Bereich und das Wasser im unteren Bereich des Wassersammelraumes 4 absetzen. Hierdurch wird aus dem oberen Bereich des Wassersammelraumes 4 stets ausschließlich Kraftstoff durch die Verbindungsleitung 5 in die Venturidüse 6 gesaugt und zwar bis zu einem Zustand, in dem sich praktisch kein Kraftstoff in dem Wassersammelraum 4 mehr befindet. Der Grenzzustand, in dem nicht mehr genügend Kraftstoff innerhalb des Wassersammelraumes 4 in dessen oberem Bereich vorhanden ist, um ohne Vermischung mit Wasser abgesaugt zu werden, wird von dem in dem oberen Bereich des Wassersammelraumes 4 vorgesehenen Wasserstandssensor 7 überwacht. Wird von dem Wasserstandssensor 7 dieser kritische Grenzzustand erfasst, so ist das Wasser aus dem Wasserfangraum 4 in einer der bei Dieselmotoren von Fahrzeugen üblichen Weise zu entfernen und der Wassersammelraum 4 anschließend wieder mit Kraftstoff zu fluten.

Bei einem diskontinuierlichen Betrieb der Einrichtung, der an sich ebenfalls möglich ist, ist innerhalb des Kraftstofffilters 2 ein zusätzlicher Wasserstandssensor erforderlich, der bei Erreichen eines vorgebbaren maximalen Wasservolumens eine Wasserabsaugung in den Wassersammelraum 4 aktiviert.

Bei dem beschriebenen Ausführungsbeispiel erfolgt die Wasserabscheidung innerhalb des Kraftstofffilters 2 reinseitig, weshalb der durch den Wassersammelraum 4 geführte Kraftstoff hier in den reinseitigen Bereich der Kraftstoff-Förderleitung 1 transportiert wird. Bei einer in dem Kraftstofffilter 2 rohseitig erfolgenden Wasserabscheidung ist durch den Wassersammelraum 4 geführter Kraftstoff selbstverständlich der Kraftstoff-Förderleitung 1 rohseitig des Kraftstofffilters 2 zuzuführen.

Für den Fall, dass der Kraftstoff durch das Kraftstofffilter nicht "gesaugt" sondern "gedrückt" wird, kann anstelle der Venturidüse 6 lediglich eine gedrosselte Kraftstoffzuleitung aus der aus dem Wassersammelraum 4 führenden Verbindungsleitung 5 in die Kraftstoff-Förderleitung 1 im Bereich der dann nicht vorhandenen Venturidüse 6 erfolgen.

## Patentansprüche

1. Krafstofffiltersystem (2) mit einem Filtergehäuse eines Verbrennungsmotors, in dem innerhalb des Filters (2) aus dem Kraftstoff ausgeschiedenes Wasser anfallen kann, bei dem von einem durch Kraftstoff beaufschlagten Bereich des Filtergehäuses, in dem sich ausgeschiedenes Wasser schwerkraftbedingt absetzen kann, eine Flüssigkeitsleitung (3) in einen außerhalb des Filtergehäuses liegenden Wassersammelraum (4) führt,
**dadurch gekennzeichnet,**
**dass** ein oberer Bereich des Wassersammelraumes (4) über eine dort angebrachte Verbindungsleitung (5) mit einem stromab des Kraftstofffilters (2) liegenden Bereich der Kraftstoff-Förderleitung (1) des Verbrennungsmotors verbunden ist.

2. Krafstofffiltersystem nach Anspruch 1,
**dadurch gekennzeichnet,**
**dass** in dem Strömungsweg zwischen Filtergehäuse und Kraftstoff-Förderleitung (1) eine Förderpumpe vorgesehen ist.

3. Krafstofffiltersystem nach Anspruch 2,
**dadurch gekennzeichnet,**
**dass** die Förderpumpe als eine innerhalb der Kraftstoff-Förderleitung (1) vorgesehene Venturidüse (6) ausgebildet ist, über die die Verbindungsleitung (5) in die Kraftstoff-Förderleitung (1) einmündet.

4. Kraftstofffiltersystem nach Anspruch 2 oder 3,
**dadurch gekennzeichnet,**
**dass** die Förderleistung der Förderpumpe ausgelegt ist auf einen kontinuierlich zu fördernden Kraftstoffstrom, bei dem mindestens die - zumindest durchschnittlich anfallende - Wassermenge, die bei Betreiben des Kraftstofffilters (1) innerhalb des Filters ausgeschieden wird, rückstaufrei aus dem Filtergehäuse abtransportiert werden kann.

5. Kraftstofffiltersystem nach einem der vorhergehenden Ansprüche,
**dadurch gekennzeichnet,**
**dass** in einem Bodenbereich des Wassersammelraumes (4) eine verschließbare Abflussöffnung vorgesehen ist.

6. Kraftstofffiltersystem nach einem der vorhergehenden Ansprüche,
**dadurch gekennzeichnet,**
**dass** sich in einem oberen Bereich des Wassersammelraumes (4) ein Wasserstandssensor (7) befindet.

7. Kraftstofffiltersystem nach einem der vorhergehenden Ansprüche,
**dadurch gekennzeichnet,**
**dass** der aus dem Wassersammelraum (4) führenden Verbindungsleitung (5) in einem aus dem Wassersammelraum (4) herausführenden Bereich eine Wasserabscheide-/Rückhalteeinrichtung vorgeschaltet ist.

## Claims

1. A fuel filter system (2) having a filter housing of an internal combustion engine in which water separated from the fuel may collect inside the filter (2), in which a liquid line (3) leads from an area of the filter housing, which is exposed to fuel and where water that is separated can settle out due to gravity, to a water collecting chamber (4) situated outside the filter housing,
**characterized in that**
an upper area of the water collecting chamber (4) is connected by a connecting line (5) installed there to an area of the fuel delivery line (1) of the internal combustion engine, said area being downstream from the fuel filter (2).

2. The fuel filter system according to Claim 1,
**characterized in that**
a delivery pump is provided in the flow path between the filter housing and the fuel delivery line (1).

3. The fuel filter system according to Claim 2,
**characterized in that**
the delivery pump is designed as a venturi nozzle (6) provided inside the fuel delivery line (1) through which the connecting line (5) opens into the fuel delivery line (1).

4. The fuel filter system according to Claim 2 or 3,
**characterized in that**
the delivery performance of the delivery pump is designed for a fuel stream to be delivered continuously, wherein at least the amount of water - at least the average amount generated - which is separated within the filter during operation of the fuel filter (1) can be transported back out of the filter housing without backing up.

5. The fuel filter system according to any one of the preceding claims,
**characterized in that**
a closable outflow opening is provided in a bottom area of the water collecting chamber (4).

6. The fuel filter system according to any one of the preceding claims,
**characterized in that**
a water level sensor (7) is situated in an upper area of the water collecting chamber (4).

7. The fuel filter system according to any one of the preceding claims,
**characterized in that**
a water separation/retaining device is connected upstream from the connecting line (5), leading out of the water collecting chamber (4), in an area leading out of the water collecting chamber (4).

## Revendications

1. Système de filtre à carburant (2) comprenant un boîtier filtrant d'un moteur à combustion interne, dans lequel peut être produite de l'eau séparée du carburant à l'intérieur du filtre (2), système dans lequel une conduite de liquide (3) mène d'une zone du boîtier filtrant, alimentée en carburant et dans laquelle peut se déposer par force de gravité de l'eau séparée, dans un espace collecteur d'eau (4) situé à l'extérieur du boîtier filtrant, **caractérisé en ce qu'**une zone supérieure de l'espace collecteur d'eau (4) est reliée, par l'intermédiaire d'une conduite de raccordement (5) montée en cet endroit, à une zone située en aval du filtre à carburant (2) de la conduite de refoulement de carburant (1) du moteur à combustion interne.

2. Système de filtre à carburant suivant la revendication 1, **caractérisé en ce qu'**une pompe d'alimentation est prévue dans le parcours d'écoulement entre le boîtier filtrant et la conduite de refoulement de carburant (1).

3. Système de filtre à carburant suivant la revendication 2, **caractérisé en ce que** la pompe d'alimentation est réalisée sous forme d'un venturi (6), prévu à l'intérieur de la conduite de refoulement de carburant (1), venturi par l'intermédiaire duquel la conduite de raccordement (5) débouche dans la conduite de refoulement de carburant (1).

4. Système de filtre à carburant suivant l'une des revendications 2 et 3, **caractérisé en ce que** la capacité de refoulement de la pompe d'alimentation est calculée sur un débit de carburant à refouler en continu, pour lequel au moins la quantité d'eau - produite au moins en moyenne - est séparée à l'intérieur du filtre lors du fonctionnement du filtre à carburant (1), peut être évacuée du boîtier filtrant sans accumulation.

5. Système de filtre à carburant suivant l'une des revendications précédentes, **caractérisé en ce qu'**une ouverture de décharge obturable est prévue dans une zone de fond de l'espace collecteur d'eau (4).

6. Système de filtre à carburant suivant l'une des revendications précédentes, **caractérisé en ce qu'**un détecteur de niveau d'eau (7) se situe dans une zone supérieure de l'espace collecteur d'eau (4).

7. Système de filtre à carburant suivant l'une des revendications précédentes, **caractérisé en ce qu'**un dispositif de séparation/retenue d'eau est monté en amont de la conduite de raccordement (5), menant de l'espace collecteur d'eau (4), dans une zone sortant du dispositif collecteur d'eau (4).
